# FASCICULE DE BREVET EUROPEEN

(11) **EP 2 334 714 B1**
(45) Date de publication et mention de la délivrance du brevet: **25.11.2020**
(21) Numéro de dépôt: 09749166.6
(22) Date de dépôt: 15.09.2009
(51) Int. Cl.: C08G 73/00, C08G 73/10, C08G 77/00, C08G 77/08, C08G 77/452, C08G 77/455, C08G 77/48, B05D 5/00, B41M 1/00, C08J 3/00, C08J 5/00, C08K 5/00, G02B 1/00

(54) **PROCEDE D'HYDROLYSE-POLYCONDENSATION PHOTOCHIMIQUE DE CHROMOPHORES RETICULABLES A ENCOMBREMENT STERIQUE, CATALYSE PAR UN ACIDE PHOTOGENERE ET SES APPLICATIONS**
VERFAHREN ZUR PHOTOCHEMISCHEN HYDROLYSE-POLYKONDENSATION VON VERNETZBAREN CHROMOPHOREN MIT STERISCHER HINDERUNG, KATALYSIERT DURCH EINE PHOTOGENERIERTE SÄURE, UND ANWENDUNGEN DAVON
METHOD OF PHOTOCHEMICAL HYDROLYSIS-POLYCONDENSATION OF CROSS-LINKABLE CHROMOPHORES WITH STERIC HINDRANCE, CATALYSED BY A PHOTOGENERATED ACID, AND THE APPLICATIONS THEREOF

(30) Priorité: 15.09.2008 FR 0856199
(43) Date de publication de la demande: 22.06.2011
(73) Titulaire: Centre National de la Recherche Scientifique (C.N.R.S.), 75794 Paris Cedex 16 (FR); Ecole Nationale Superieure De Chimie Montpellier (ENSC), 34000 Montpellier (FR); Université Montpellier 2, 34095 Montpellier Cedex 5 (FR)
(72) Inventeur: DAUTEL, Olivier, F-34070 Montpellier (FR); MOREAU, Joël, F-34000 Montpellier (FR); LERE-PORTE, Jean-Pierre, F-34090 Montpellier (FR)
(74) Mandataire: Lavoix
(86) Numéro de dépôt international: PCT/FR2009/051734
(87) Numéro de publication internationale: WO 2010/029273

(56) Documents cités:
- EP-A- 0 957 124
- EP-A- 1 788 012
- EP-A- 1 867 681
- EP-A- 1 942 150
- US-A1- 2004 096 773
- US-B1- 6 664 021

## Description

L'invention porte sur l'hydrolyse-polycondensation de chromophores réticulables catalysés par un acide photogénéré. Elle porte également sur les applications de ce procédé, notamment à la photolithographie.

Les verres issus du procédé sol-gel incorporant des chromophores organiques possèdent de nombreuses applications telles que les colorants lasers, les matériaux pour l'optique non-linéaire, les biocapteurs, ou les capteurs solaires^{[1]}. Les chromophores sont incorporés dans la matrice inorganique par physisorption. Cependant, l'incorporation de concentrations élevées en colorants ou en chromophores dans une matrice de sol-gel demeure un grand défi. Une avancée importante a été réalisée avec le développement des silsesquioxanes où le fragment organique est lié de façon covalente au réseau de silice^{[2]}. Ainsi, le procédé sol-gel offre la possibilité de concevoir des dispositifs hybrides luminescents sur la base d'alkoxysilanes fonctionnalisés. Dantas de Morais et *al.* ont montré l'intérêt du procédé sol-gel pour produire des diodes électroluminescentes hybrides organique-inorganique (HLEDs) multicouches composées de deux ou trois couches^{[3]}. Les précurseurs mono-fonctionnels ont été copolymérisés en présence de tétraéthoxysilane (TEOS) utilisé en tant qu'agent de réticulation. Dans la même optique, Müllen *et al.* ont rapporté la fabrication de dispositifs électroluminescents basés sur des couches de pérylènes hybrides^{[4]}. Cependant, pour éviter l'agrégation des chromophores et pour obtenir des matériaux fortement fluorescents, ces précurseurs de silsesquioxane ont dû être dilués dans un matrice de silice par co-condensation avec du TEOS. D'après ces résultats, cette approche semble prometteuse pour la fabrication d'HLEDs. De telles unités actives greffées présentent plusieurs avantages par rapport aux matériaux purement organiques tels que les polymères et les molécules organiques. Elles permettent : une réticulation efficace par des réactions de condensation fournissant une stabilité chimique et mécanique ; la formation de films insolubles qui permettent la fabrication de dispositifs multicouches ; des procédés de fabrication simples par dépôt à la tournette (spin-coating en anglais). Cependant, l'efficacité finale de HLEDs dépend non seulement de la qualité et de la réponse physico-chimiques intrinsèques des différents porteurs de charge et des couches luminescentes, mais elle dépend également du contrôle du mode de dépôt.

Il existe donc un réel besoin en des procédés permettant ce contrôle du mode de dépôt.

EP 1 788 012 décrit une composition de revêtement pour former un revêtement antiréfléchissant à base de silicium pour son utilisation dans un procédé de photolithographie.

US 2004/0096773 décrit une composition photosensible comprenant un précurseur de polyimide, un acide polyamique et un photogénérateur d'acide.

EP 0 957 124 décrit une composition photosensible obtenue à partir d'un polyimide, d'un agent photoréticulant et d'un photogénérateur d'acide.

EP 1 867 681 décrit une composition à base de silicium comprenant un composé à base de silicium obtenu par condensation hydrolytique d'un composé silicié hydrolysable en présence d'un catalyseur acide, ainsi qu'un composé pouvant être un sel d'iodonium.

EP 1 942 150 décrit une composition de résine siloxane comprenant un composé siloxane et du 1-t-butoxy-2-propanol.

US 6 664 021 décrit une composition photosensible comprenant notamment un PAG et un précurseur de polyimide.

Les présents inventeurs ont trouvé qu'un excellent contrôle du mode de dépôt pouvait être obtenu en mettant en œuvre une hydrolyse-polycondensation de chromophores réticulés et stériquement encombrés, qui est catalysée par un acide photogénéré.

Les photo-générateurs d'acide (PAG), qui subissent des réactions de clivages photochimiques pour produire un acide, ont été intensivement employés dans des systèmes d'imagerie basés sur des réactions induites ou catalysées par un acide, telles que la polymérisation d'époxydes ou la réticulation de résines photosensibles^{[5]}. Holdcroft *et al.* ont utilisé ce type de catalyseur (à l'origine développée pour la lithographie des polystyrènes) pour réaliser la photolithographie d'un polythiophène fonctionnalisé par le groupement tétrahydropyranyle^{[6]}. L'acide généré dans le film de polythiophène par photodécomposition du PAG, catalyse le clivage du groupement tétrahydropyranyle. Le polythiophène devient alors insoluble et permet l'élimination par lavage des zones non irradiées. Cependant, très peu de papiers rapportent l'utilisation du PAG comme catalyseur du procédé sol-gel. Les PAGs ont été employés pour hydrolyser des disiloxanes comme précurseurs de films d'oxycarbure de silicium^{[7]} ou pour la photo-impression (photopatterning en anglais) de films de silice mésoporeuse^{[8]}. Par contre, la photo-impression (photopatterning) de précurseurs hybrides électroactifs n'a jamais été rapporté.

Ainsi, les présents inventeurs ont trouvé qu'il était possible d'obtenir des films minces de très bonne qualité par un procédé d'hydrolyse-polycondensation de chromophores stériquement encombrés réticulables, ledit procédé étant catalysé par un catalyseur photo-générateur d'acide (PAG).

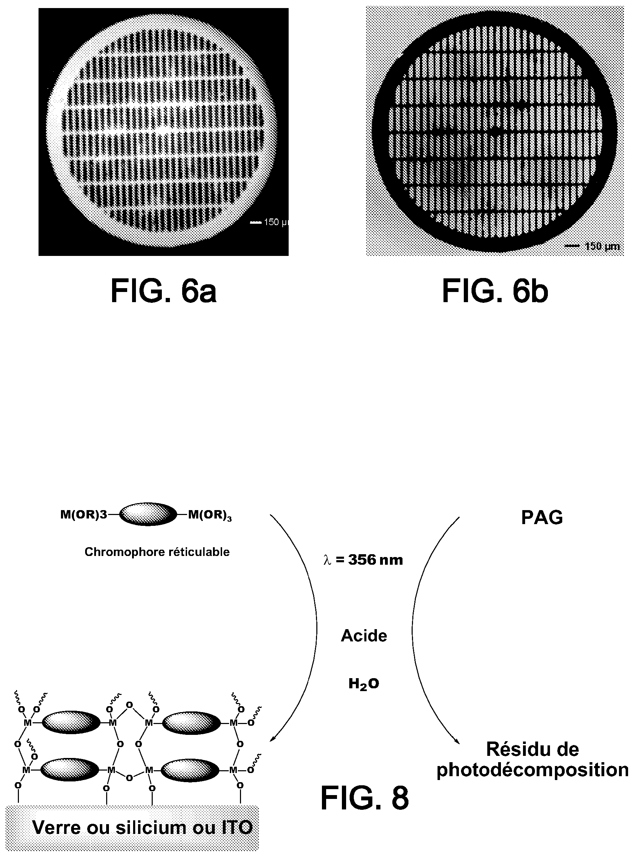

Le photo-générateur d'acide (PAG) est photodécomposé sous irradiation UV et libère un acide qui permet l'hydrolyse-polycondensation du chromophore. Le procédé d'hydrolyse-polycondensation conforme à l'invention peut être représenté par le schéma réactionnel donné en tant que Figure 8.

Dans la présente demande de brevet, on entend par « chromophore », une molécule de type pi.

Une molécule de type pi est composée d'un atome ou groupe d'atomes à travers lequel des électrons peuvent être délocalisés. De préférence les orbitales permettant cette délocalisation sont les orbitales p d'atomes de carbone à liaison multiple telles que par exemple celles des alcènes, alcynes, noyaux aromatiques neutres ou chargés, systèmes cycliques comprenant des hétéroatomes.

Le chromophore a une capacité à absorber l'énergie des photons dans la gamme du spectre visible, ainsi les électrons délocalisés pourront entrer en résonance avec le rayonnement incident. Ces molécules changeront donc de couleur en réponse à l'excitation lumineuse.

Le chromophore montre des propriétés optoélectroniques, ainsi il est utilisé pour la fabrication de composants électroniques qui émettent ou interagissent avec la lumière, il permet de véhiculer, mémoriser et d'amplifier des signaux optiques par des moyens purement optiques.

Dans la présente invention, le chromophore comporte au moins un groupe hydrolysable et polycondensable, du type M(OR¹)n, M représentant un métal du groupe III ou IV de la classification périodique, R¹ représentant un alkyle en C₁-C₄ et n étant un nombre entier compris entre 1 et 5.

Compte tenu de la présence de ce groupe, du type M(OR¹)ₙ, le chromophore selon l'invention est dit « réticulable », la réticulation étant effectuée par hydrolyse et polycondensation, créant des liaisons covalentes entre différentes molécules de chromophores.

Le chromophore réticulable est également qualifié de « stériquement encombré » car il comprend, entre le système pi-conjugué et le groupe réticulable, un groupe à encombrement stérique. L'introduction de ce groupe à encombrement stérique permet d'éviter l'agrégation d'un chromophore dans le matériau réalisé par hydrolyse-polycondensation catalysé par un acide photo-généré. Ce groupe à encombrement stérique n'interfère pas avec le système pi-conjugué. Il peut être choisi parmi

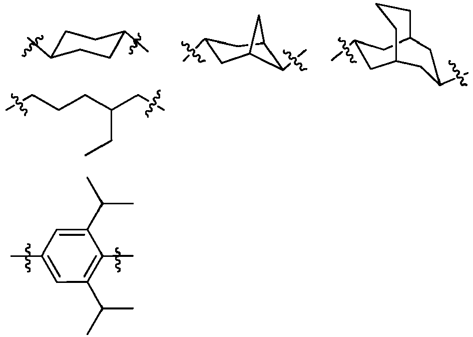

Selon l'invention, le chromophore réticulable et stériquement encombré, est choisi parmi ceux représentés par l'une des formules ci-dessous : 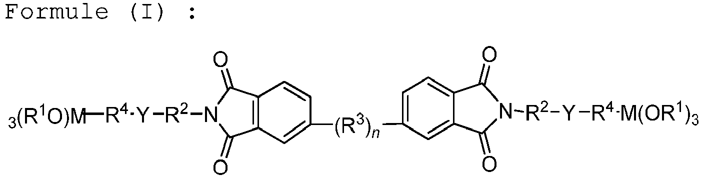 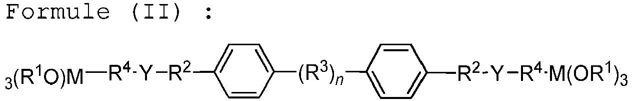 dans lesquelles
R¹ représente alkyle en C₁-C₄;
R² représente un groupement à encombrement stérique ;
R³ représente un système pi-conjugué ;
Y représente O, S ou NH ou est absent;
R⁴ représente un groupe alkyle en C₃-C₁₈, de préférence en C₃-C₈, et plus préférentiellement en C₃ ;
   M représente un métal du groupe III ou IV de la classification périodique ;
n est un nombre entier.

Le chromophore réticulable est ou bien un polymère ou bien un oligomère, selon la valeur du nombre entier n. Le nombre entier n peut être compris entre 1 et 10000, de préférence entre 1 et 100 et plus préférentiellement encore entre 1 et 20. Il est cependant plus aisé de travailler avec des oligomères ou de petits polymères pour lesquels n est compris entre 1 et 19, de préférence entre 1 et 15, et plus préférentiellement encore entre 1 et 10.

Par alkyle en C₁-C₄ on entend méthyle, éthyle, n-propyle, isopropyle, n-butyle, isobutyle, tert-butyle. Comme métal M, on peut citer Si, Ti, Zr, Sn, Al. De préférence M est Si.

La présence du groupe à encombrement stérique R² permet d'obtenir des films minces très homogènes.
Comme exemple de groupement R² à encombrement stérique on peut citer les groupements choisis dans le groupe comprenant :

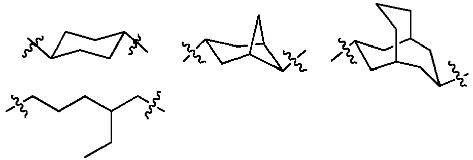

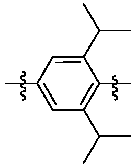

Comme exemples de système pi-conjugué R³, on peut citer ceux choisis dans le groupe comprenant : 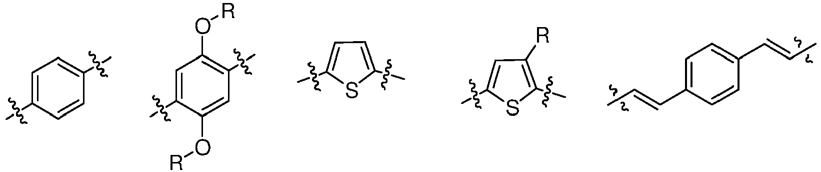 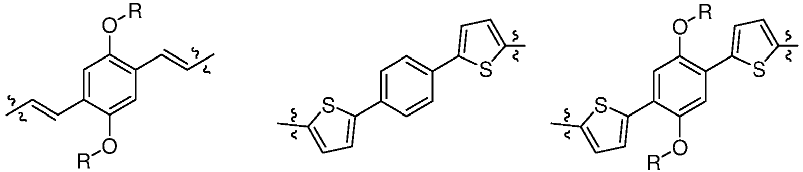 avec R représentant H ou un groupement alkyle en C₁-C₁₈, de préférence en C₁-C₁₂, et plus préférentiellement encore en C₁-C₆, ledit groupe alkyle étant éventuellement ramifié ou substitué par un hétéroatome (O, S, N...).

Ces nouveaux chromophores sont préparés par insertion d'un groupement à encombrement stérique entre le système pi-conjugué et le groupe M(OR¹)₃, par l'intermédiaire d'un groupement -YR⁴-.

La synthèse des chromophores de formule (I) est décrite dans la demande de brevet FR 08 56179 au nom de la demanderesse déposée le 15 septembre 2008.

Le schéma de synthèse envisagé pour les chromophores de formule (II) est le suivant : 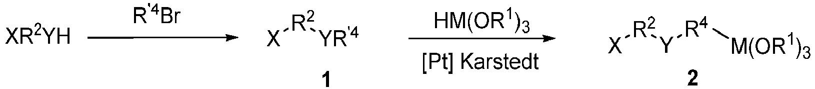 R¹, R², Y et R⁴ étant tels que définis ci-dessus, X étant un halogène (Br, Cl ou I) et R'⁴ représentant un groupe alkyle présentant le même nombre d'atomes que le groupe R⁴ et présentant une insaturation éthylénique.

Ce mode de synthèse est particulièrement adapté à l'introduction de groupements à encombrement stérique R² de type aromatique. Son introduction s'effectue préférentiellement au moyen d'un dérivé halogéné X-R²-YH, (X, Y et R² étant tels que définis ci-dessus), qui est de préférence un dérivé halogéné du phénol de type X-R²-OH ou un dérivé halogéné de l'aniline de type X-R²-NH₂.

Ainsi, la synthèse peut être faite à partir d'un dérivé halogéné du phénol de type X-R²-OH, selon le schéma réactionnel suivant :

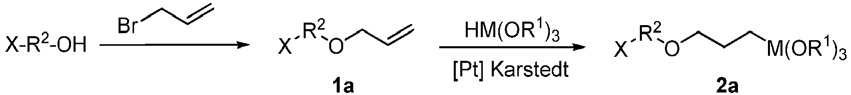

L'allylation de la fonction phénol s'effectue par le bromure d'allyle en présence d'une base pour fournir la. L'hydrosillylation de la fonction vinyle par HM(OR¹)₃ catalysée par le catalyseur de Karsted fournit l'intermédiaire 2a.

Des exemples de 4-halogéno-phénols envisagés sont donnés ci-après :

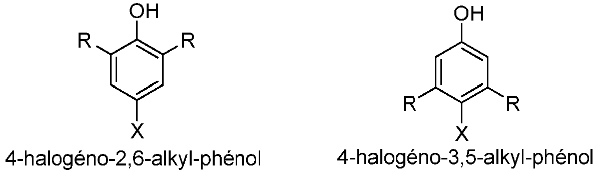

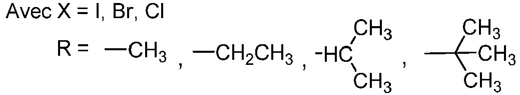

La synthèse peut également être faite à partir d'un dérivé halogéné de l'aniline de type X-R²-NH₂, selon le schéma réactionnel suivant :

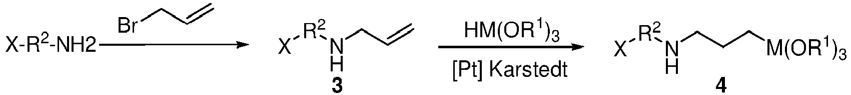

L'allylation de la fonction amine s'effectue par chauffage à 120°C pendant deux jours d'un mélange équimolaire d'halogéno-aniline et de bromure d'allyle. L'hydrosilylation de la fonction vinyle par HM(OR¹)₃ catalysée par le catalyseur de Karsted fournit l'intermédiaire **4.**

Des exemples de 4-halogéno-anilines envisagés sont les suivants :

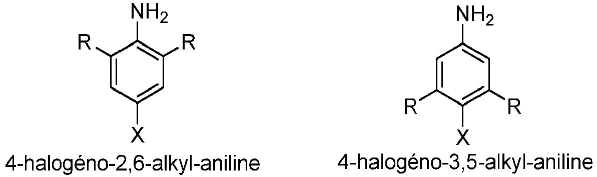

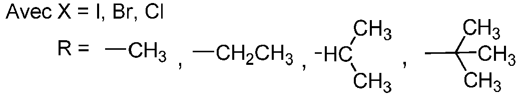

Finalement, les deux intermédiaires trialkoxymétallés **2** ou **2a** et **4** sont engagés dans un couplage organométallique avec le système pi-conjugué, comme ceci est décrit dans la demande n° 08 56179 mentionnée ci-dessus.

Le procédé conforme à l'invention est particulièrement adapté à l'hydrolyse-polycondensation des chromophores décrits dans la demande de brevet FR 08 56179 mentionnée ci-dessus.

Plus particulièrement, le procédé est mis en œuvre sur des chromophores silylés, c'est-à-dire à des chromophores de formule 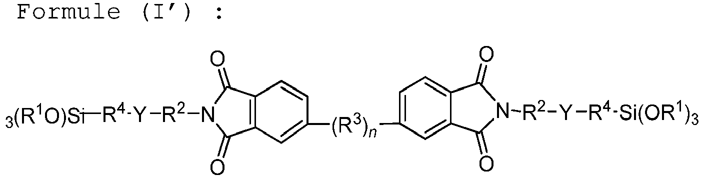 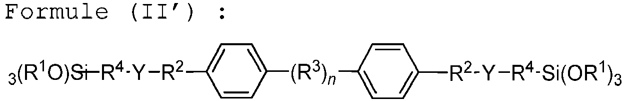 R¹, R², R³, R⁴, Y et n étant tels que définis ci-dessus. Selon un mode de réalisation particulier, le chromophore silylé est le 5,5'-(1E,1'E)-2,2'-(2,5-bis(octyloxy)-1,4-phénylène)bis(éthène-2,1-diyl)bis(2-(4-(3-triéthoxysilyl)-propoxy)cyclohexyl)isoindoline-1,3-dione) dont la synthèse est décrite dans la demande de brevet au nom de la demanderesse mentionnée ci-dessus.

Le PAG est choisi d'une part pour sa capacité à se photodécomposer sous irradiation UV, en formant au moins un acide et, d'autre part pour sa capacité à catalyser l'hydrolyse et la polycondensation des fonctions -M(OR¹)₃. La réaction d'hydrolyse peut se produire uniquement avec l'humidité de l'air sans ajout d'eau supplémentaire.

Selon l'invention, le PAG est choisi dans le groupe comprenant les dérivés de fluoroalkylsulfonyloxy et les sels de iodoniums.

Les dérivés de fluoroalkylsulfonyloxy pouvant être utilisés comme PAG dans le procédé de l'invention, sont choisis dans le groupe comprenant :
- le N-trifluorométhylsulfonyloxy-1,8-naphtalimide (NIOTf) de formule : 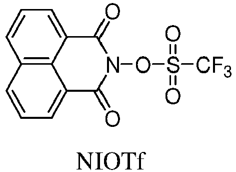
- les dérivés de NIOTf de formules : 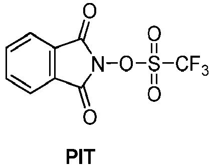 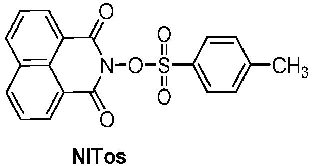 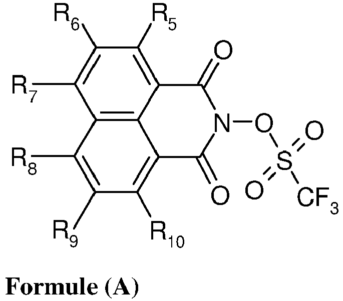 Avec R₅ à R₁₀ pouvant, chacun indépendamment l'un de l'autre, être choisi parmi :
   H ; CH₃ ; alkyl en C₅ à C₂₀ ; (alkyl linéaire en C₁ à C₄)-C≡C-, de préférence CH₃-C≡C- ; (alkyl en C₁ à C₄)₂-CH-C≡C- ; (alkyl en C₁ à C₄)₃-C-C≡C-, de préférence (CH₃)₃-C-C≡C- ; (alkyl en C₁ à C₄)₃-Si-C≡C-, de préférence 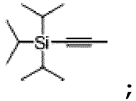
- et d'autres composés de formules :

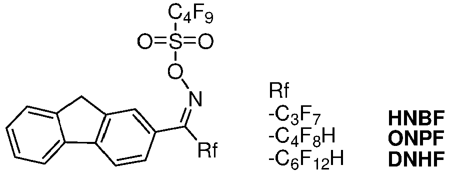

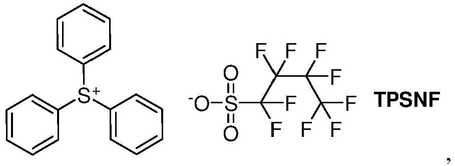

Les sels d'iodonium pouvant être utilisés comme PAG dans le procédé de l'invention, sont choisis dans le groupe comprenant Ph₂IB(C₆H₅)₄, Ph₂IOSO₂CF₃, Ph₂ISbF₆, Ph₂IBF₄, et leurs mélanges.

Dans le cas où le procédé de l'invention est destiné au domaine de l'optoélectronique, les sels d'iodonium [9], bien que plus classiquement utilisés comme PAG, ne sont pas préférés car ils risquent de provoquer un quenching d'excitons.

Un PAG préféré dans le procédé de l'invention est le NIOTf puisque cette molécule organique neutre peut subir un photo-clivage homolytique de sa liaison N-O pour produire la benzo[cd]indol-2(1H)-one (BIONE), du CO₂ et de l'acide trifluorométhane-sulfonique^{[11]}. En outre, ce photo-générateur d'acide possède une absorption forte à 350 nm, région spectrale où l'absorption de 5,5'-(1E,1'E)-2,2'-(2,5-bis(octyloxy)-1,4-phénylène)bis(éthène-2,1-diyl)bis(2-(4-(3-triéthoxysilyl)-propoxy)-cyclohexyl)-isoindoline-1,3-dione) **6** est faible. Ainsi, selon une mode de réalisation particulier, la présente invention porte sur le procédé d'hydrolyse-polycondensation de 5,5'-(1E,1'E)-2,2'-(2,5-bis(octyloxy)-1,4-phénylène)bis-(éthène-2,1-diyl)bis (2-(4-(3-triéthoxysilyl)-propoxy)-cyclohexyl)isoindoline-1,3-dione) en utilisant le NIOTf en tant que PAG.

Un dérivé du NIOTf (formule (A)) peut aussi être utilisé : 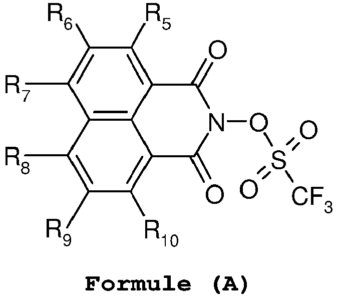 avec R₅ à R₁₀ pouvant, chacun indépendamment l'un de l'autre, être choisi parmi :
H ; CH₃ ; alkyl en C₅ à C₂₀ ; (alkyl linéaire en C₁ à C₄)-C≡C-, de préférence CH₃-C≡C- ; (alkyl en C₁ à C₄)₂-CH-C≡C- ; (alkyl en C₁ à C₄)₃-C-C≡C-, de préférence (CH₃)₃-C-C≡C- ; (alkyl en C₁ à C₄)₃-Si-C≡C-, de préférence

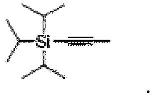

Parmi ces PAG de formule (A), on préfère plus particulièrement le dérivé du NIOTf de formule (A) dans laquelle R₇ est le triisopropyl-Si-C=C-, qui est dénommé TIPSA-NIOTf et présente la formule ci-dessous :

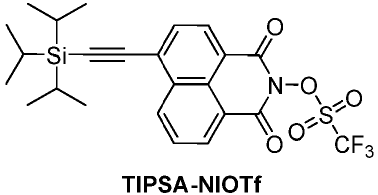

Ce nouveau PAG, le TIPSA-NIOTf, est synthétisé en 3 étapes à partir de l'anhydride 4-bromonaphtalique. Dans un premier temps, le groupement triisopropylsilyle est introduit grâce à un couplage de Sonogasshira avec un excès de triisopropylsilylacétylène. La fonction imide N-hydroxylée est générée par condensation du chlorhydrate de l'hydroxyl amine et de l'anhydride silylé en présence de pyridine. Finalement, l'addition de chlorure de trifluorométhanesulfonyle permet d'obtenir le TIPSA-NIOTf avec de bons rendements.

Ainsi, le schéma réactionnel de synthèse du TIPSA-NiOTf peut être le suivant :

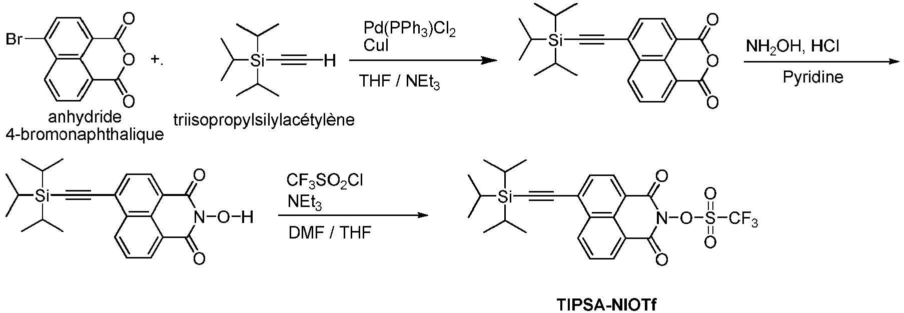

La quantité de PAG et l'énergie apportée par l'irradiation UV, sont choisies de telle sorte qu'elles soient suffisantes pour permettre la polycondensation souhaitée. Selon un mode de réalisation particulier, la quantité de PAG est comprise entre 0,01 et 100%, de préférence entre 10 et 60% et plus préférentiellement encore d'environ 50%, les pourcentages étant des pourcentages molaires par rapport au nombre de mole de chromophore réticulable. Lorsque l'on utilise comme PAG, un PAG de formule (A) et plus particulièrement le TIPSA-NiOTf, la quantité nécessaire pour hydrolyser et polycondenser le film est inférieure à celle nécessaire pour les autres PAG. Ainsi, la quantité du PAG de formule (A) et notamment du TIPSA-NiOTf utilisée est comprise entre 0,01 et 50%, de préférence comprise entre 0,01 et 20 % et plus préférentiellement encore comprise entre 0,01 et 5% et encore plus préférentiellement comprise entre 0,01 et 1%.

L'irradiation est réalisée au moyen d'une lampe UV large bande (200-600 nm, 150 mW/cm²). L'irradiation UV est de préférence conduite en filtrant les UV lointains (< 300 nm) et à des doses relativement faibles d'irradiation de l'ordre de 80 à 200 mJ/cm², de préférence de l'ordre de 100 à 150 mJ/cm². La filtration des UV lointains peut se faire par tout moyen. Un moyen très simple est de placer entre la lampe UV et la zone à irradier une plaque de verre.

L'hydrolyse-polycondensation étant une réaction catalysée, des doses relativement faibles d'irradiation sont suffisantes. L'utilisation de faibles doses d'irradiation présente l'avantage de limiter la photo-oxydation du chromophore.

Selon un mode de réalisation particulier du procédé de l'invention, le chromophore réticulable est appliqué sur un support qui est choisi dans le groupe comprenant le verre, le silicium et l'oxyde d'indium dopé à l'étain (ou ITO Indium Tin Oxide en anglais).

Le choix du support sera bien évidemment fonction des applications du produit.

Selon un autre mode de réalisation, le procédé de l'invention comprend les étapes suivantes :
- choix d'un support ;
- application du chromophore réticulable à encombrement stérique sur une face du support ;
- application du PAG sur la dite face du support ;
- irradiation UV ;
- éventuellement recuit ;
- éventuellement élimination du PAG n'ayant pas réagi et de ses produits de photodécomposition.

De façon classique, l'application du chromophore réticulable, peut se faire par dépôt à la tournette (spin-coating). Le support est choisi comme décrit précédemment.

Les étapes d'application du chromophore réticulable et d'application du PAG sur le support peuvent être faites de façon simultanée. Dans ce cas, le chromophore réticulable et le PAG sont mis en solution dans un même solvant puis appliqués, par exemple par dépôt à la tournette (spin-coating) sur le support.

Selon un autre mode de réalisation, les deux applications peuvent être faites successivement. Ainsi, le chromophore réticulable peut être appliqué en premier lieu puis, sur la couche ainsi formée, on applique le PAG. Les présents inventeurs ont trouvé que le PAG joue un rôle de protection du chromophore réticulable contre le rayonnement UV et permet ainsi de le protéger du photobleaching. Il est par ailleurs très facile à éliminer par lavage. Les solvants utilisés pour le lavage sont choisis en fonction du PAG utilisé. On peut citer le THF, le dioxane, l'acétone, la méthyléthylcétone, le dichlorométhane, l'hexane, le cyclohexane, l'éthanol, utilisés seuls ou en mélange.

Le procédé conforme à l'invention permet l'obtention de films minces fluorescents parfaitement homogènes. Sans vouloir être liés par aucune théorie, les inventeurs sont d'avis que cette homogénéité est due au fait que les groupes à encombrement stérique du chromophore réticulable permettent d'éviter le recouvrement des chromophores qui restent dans une agrégation supramoléculaire de type J. La stabilité mécanique et chimique des films obtenus permet un dépôt répété de films dotés de propriétés opto-électroniques différentes pour la fabrication de dispositifs multicouches.

Compte tenu du fait que, grâce au procédé de l'invention, l'hydrolyse-polycondensation peut être menée d'une manière parfaitement contrôlée par une irradiation UV, elle peut être appliquée à la réalisation de photolithographie sur des films minces du précurseur, c'est-à-dire du chromophore réticulable et stériquement encombré.

Le procédé de l'invention peut ainsi permettre de réaliser avec une très grande précision de la photolithographie. Ainsi, un autre objet de la présente invention est un procédé de photolithographie comprenant les étapes de :
- choix d'un support ;
- application du chromophore réticulable et stériquement encombré et du PAG sur une face du support ;
- application d'un masque sur la face du support comprenant le chromophore et le PAG ;
- irradiation UV ;
- éventuellement recuit ;
- élimination du PAG et de ses produits de photodécomposition et du chromophore réticulable n'ayant pas réagi.

De façon avantageuse, le PAG utilisé dans le procédé de photolithographie est le PAG de formule (A), et plus particulièrement le TIPSA-NIOTf.

Comme décrit précédemment, l'application du chromophore réticulable et du PAG peut se faire simultanément ou séparément. Les quantités respectives sont celles mentionnées précédemment. Le choix du support est tel que décrit précédemment.

Le procédé peut éventuellement comporter une étape de recuit qui est conduite à des températures comprises entre 40 et 80°C, de préférence entre 50 et 70°C et plus préférentiellement encore à environ 60°C. La durée du recuit pourra être déterminée par l'homme du métier en fonction de la nature des différents constituants. De façon générale, le recuit sera conduit en 5 min à 60 min, de préférence en 10 à 40 min, et plus préférentiellement encore en 15 à 30 minutes.

Seules les parties non masquées sont irradiées, le chromophore réticulable non irradié, c'est-à-dire non polycondensé est éliminé par lavage avec le PAG, à l'aide de solvants appropriés. Ces solvants peuvent être choisis parmi le THF, l'acétone, l'éthanol et leurs mélanges.

L'invention a également pour objet une composition comprenant le chromophore réticulable et stériquement encombré et le PAG en solution dans un solvant. Le solvant est choisi dans le groupe comprenant le THF, le dioxane, l'acétone, la méthyléthylcétone, le dichlorométhane, l'hexane, le cyclohexane, l'éthanol et leurs mélanges. De préférence le solvant est le THF.

La composition de l'invention peut être utilisée comme encre invisible fluorescente, applicable par impression au jet d'encre et greffable sur support, notamment en verre.

Ainsi la présente invention porte sur une méthode de marquage comprenant l'application par impression jet d'encre sur un support en verre d'une composition comprenant le chromophore réticulable à encombrement stérique et le PAG en solution dans un solvant, puis l'irradiation UV. De façon avantageuse, le PAG utilisé dans cette méthode de marquage est un PAG de formule (A), plus particulièrement le TIPSA-NIOTf.

La stabilité mécanique et chimique des films permet notamment un dépôt répété de films dotés de propriétés opto-électroniques complémentaires pour la fabrication de dispositifs multicouches. Ce procédé permet également le micropatterning de films minces doués d'activité optoélectronique par photolithographie. L'invention peut donc trouver de multiples applications, tant dans les domaines de la chimie des matériaux et de l'opto-électronique organique, notamment pour la fabrication de marqueurs, de capteurs, de diodes électroluminescentes, de transistors et de cellules solaires.

### EXEMPLES :

### EXEMPLE 1 :

On prépare un PAG TIPSA-NIOTf selon le schéma réactionnel suivant :

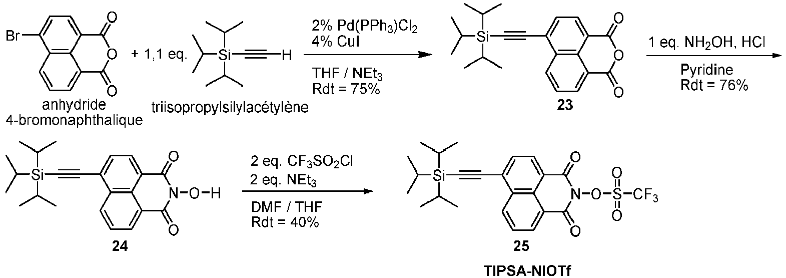

### EXEMPLE 2 :

On a préparé une solution de 30mg/mL de 5,5'-(1E,1'E)-2,2'-(2,5-bis(octyloxy)-1,4-phénylène)bis(éthène-2,1-diyl)bis(2-(4-(3-triéthoxysilyl)-propoxy)cyclohexyl)isoindoline-1,3-dione) (composé **6**) dans le THF selon l'exemple 1 de la demande de brevet FR 08 56179 mentionnée ci-dessus.

A partir de cette solution, on a préparé un film mince de 100nm par dépôt à la tournette (spin-coating) sur une plaque (wafer en anglais) de silicium.

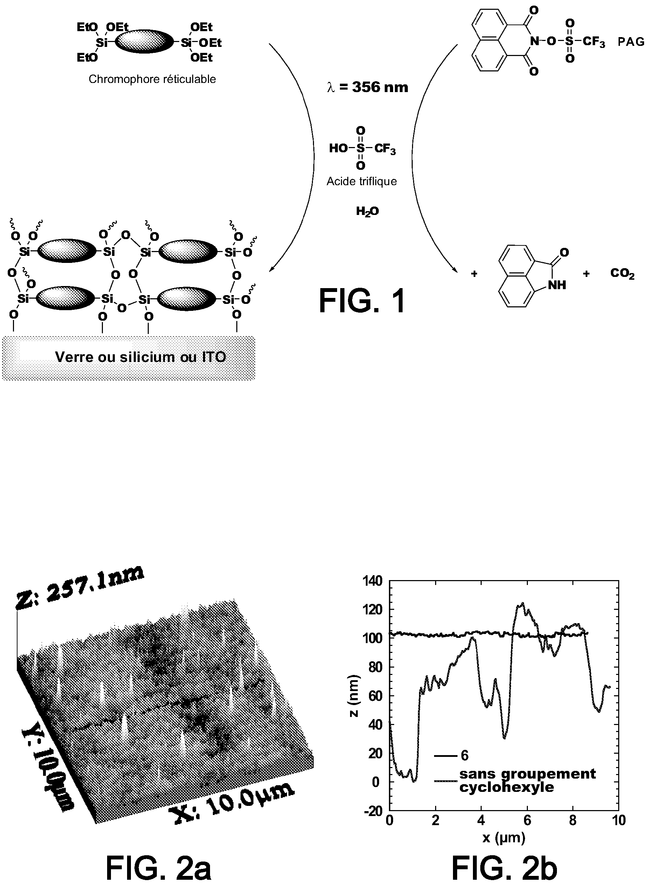

On a fait une étude topographique de couches spin-coatées sur plaque (wafer) de silicium par microscopie de force atomique (AFM) en mode contact intermittent (tapping en anglais) à l'aide d'un appareil *Dimension 3100 Veeco Instruments.* L'image de la topographie de la plaque (wafer) du composé **6** est donnée sur la figure 2a et le profil topographique est donné sur la figure 2b. Le profil topographique d'un film de 100 nm d'épaisseur à partir du précurseur ne possédant pas le groupement cyclohexyle^{[10]} est également donné sur la figure 2b à titre de comparaison.

La rugosité du film obtenu avec le composé **6** en tant que précurseur est de 1 nm. Le film comparatif est quant à lui extrêmement hétérogène, sa rugosité est de 40 nm.

### EXEMPLE 3 :

On a préparé une solution du composé de formule **6** (30 mg/mL) et de 0,5 éq. molaire de *N-*trifluorométhylsulfonyloxy-1,8-naphtalimide (NIOTf) dans le THF. La solution conservée dans l'obscurité est stable pendant plusieurs jours.

On a également préparé une solution du composé de formule **6** (30mg/mL) dans le THF.

Ces solutions ont été déposées par dépôt à la tournette (spin-coating) sur des plaques (wafers) de silicium. Sur les films minces obtenus on a déposé une lame de verre pour filtrer le domaine spectral des UV lointains (< 300 nm). Puis on a exposé les films minces à une lampe UV large bande (200-600 nm, 150 mW/cm²) au moyen d'un système d'irradiation Fusion UV Curing Model F300S. L'irradiation a été conduite sans autres précautions à la température ambiante et sous air. Les traces d'eau présentes dans l'atmosphère sont suffisantes pour promouvoir l'hydrolyse des groupements Si(OEt)₃ dans le film mince de siloxane.

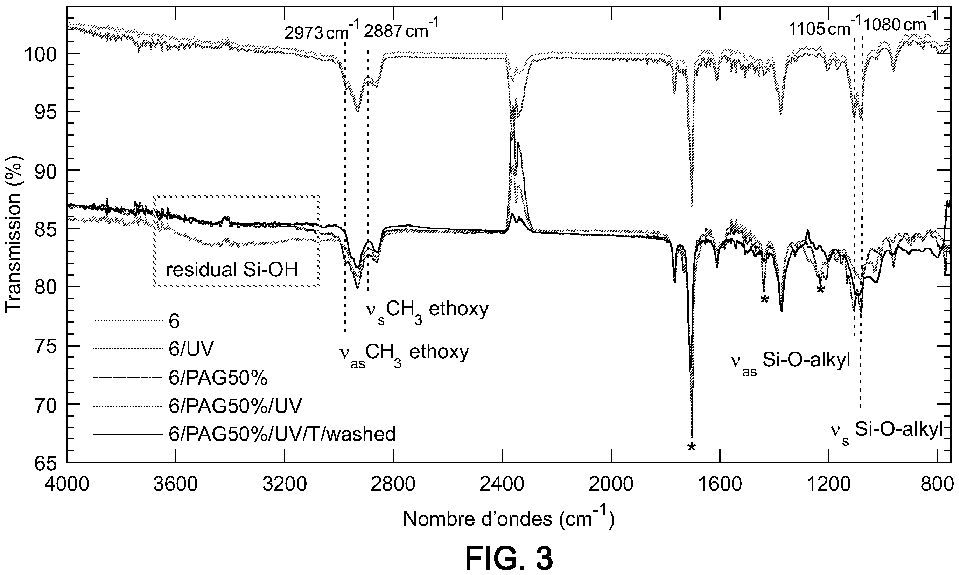

La réaction d'hydrolyse-polycondensation a été suivie par spectroscopie infrarouge. La figure 3 représente les spectres infrarouges obtenus pour les produits suivants :
- couche mince ne comprenant que le composé **6,** avant irradiation UV (désigné par **6**)
- couche mince ne comprenant que le composé **6,** après irradiation UV (désigné par **6**/UV)
- couche mince comprenant le composé **6** et 50% PAG, avant irradiation UV (désigné par **6**/PAG50%)
- couche mince comprenant le composé **6** et 50% PAG, après irradiation UV (désigné par **6**/PAG50%/UV)
- couche mince comprenant le composé **6** et 50% PAG, après irradiation UV, recuit à 60°C pendant 20 min et lavage au THF, à l'éthanol et finalement à l'acétone (désigné par **6**/PAG50%/UV/washed).

Au cours de la réaction d'hydrolyse-polycondensation, les groupements éthoxyles de **6** sont éliminés alors que des liaisons Si-O-Si sont créées. Cette transformation peut être mise en évidence par le suivi des intensités des bandes d'absorption des vibrations d'élongation antisymétrique (vₐₛCH₃) et symétrique (νₛCH₃) des CH₃ respectivement à 2973 et 2887 cm⁻¹ (Figure 3).

Sur le spectre FTIR de **6**/PAG50%/UV, ces bandes ont complètement disparu, (ce qui se manifeste par la diminution d'intensité des deux pics plus intenses) ce qui est significatif de l'hydrolyse des fonctions Si-OEt.

De la même manière, la formation du réseau Si-O-Si peut être suivie par le déclin de l'intensité des bandes de vibration antisymétrique (νₐₛSi-O-CH₂) et symétrique (νₛSi-O-CH₂) des liaisons Si-O-CH₂, respectivement observées à 1105 et 1080 cm⁻¹, ainsi que l'apparition d'une bande large de 1060 à 1160 cm⁻¹ correspondant aux vibrations antisymétrique et symétrique des différentes liaisons Si-O-Si du réseau de silice. Bien que des fonctions Si-OH (vSiO-H autour de 3400 cm⁻¹) peuvent être observées sur le spectre FTIR du film **6**/PAG50%/UV, la condensation peut être optimisée après 20 minutes de traitement thermique à 60°C. Ceci est confirmé par la stabilité du film (**6**/PAG50%/UV/T/washed) face aux lavages par différents solvants et l'absence de vSiO-H à 3400 cm⁻¹. Une première indication de l'élimination complète du PAG et de ses sous-produits lors du lavage est également donnée par l'étude infrarouge. En effet, trois bandes de vibration supplémentaires attribuées au PAG peuvent être observées sur le spectre **6**/PAG50% comparé au spectre de 6 seul (localisées à 1697, 1435 et 1225 cm⁻¹, désignées par une étoile sur la figure 3). Ces trois bandes ont complètement disparu après le lavage du film (spectre **6**/PAG50%/UV/T/washed).

En l'absence de PAG, le film de **6** n'est pas affecté par l'irradiation UV. Dans ce cas, le spectre FTIR (6) n'est pas modifié par l'irradiation. Aucune hydrolyse des fonctions triéthoxysilanes n'est détectée sur le spectre **6**/UV.

### EXEMPLE 4 :

On a préparé une solution du composé de formule **6** (30 mg/mL) et de 2mg de TIPSA-NIOTf dans le THF. La solution conservée dans l'obscurité est stable pendant plusieurs jours.

On a également préparé une solution du composé de formule **6** (30mg/mL) dans le THF.

Ces solutions ont été déposées par dépôt à la tournette (spin-coating) sur des plaques (wafers) de silicium. Sur les films minces obtenus on a déposé une lame de verre pour filtrer le domaine spectral des UV lointains (< 300 nm). Puis on a exposé les films minces à une lampe UV large bande (200-600 nm, 150 mW/cm²) au moyen d'un système d'irradiation Fusion UV Curing Model F300S. L'irradiation a été conduite sans autres précautions à la température ambiante et sous air. Les traces d'eau présentes dans l'atmosphère sont suffisantes pour promouvoir l'hydrolyse des groupements Si(OEt)₃ dans le film mince de siloxane.

### EXEMPLE 5:

Des films minces ont été préparés comme dans l'exemple 3 ci-dessus en utilisant des lames de verre comme support. A titre de comparaison, on a également préparé un film mince à l'aide d'une solution comprenant le composé **6** et TBAF 50%.

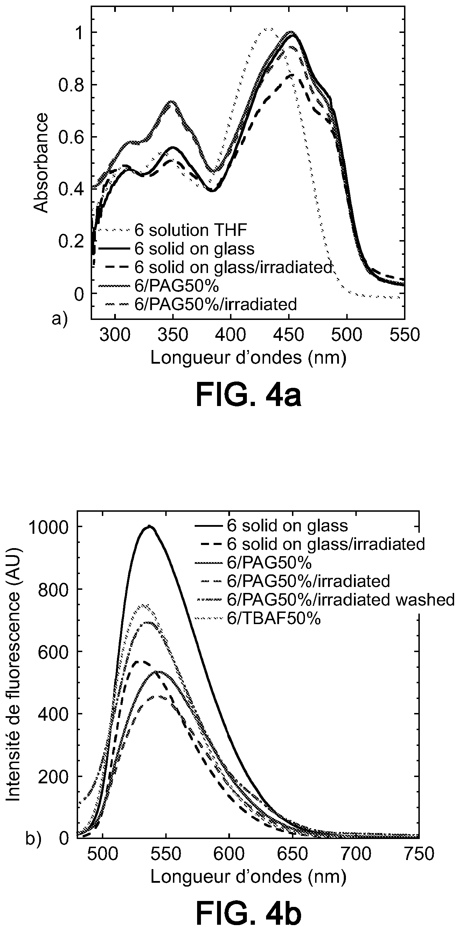

On a réalisé les spectres d'absorption UV-visible (figure 4a) et d'émission (figure 4b) des produits suivants :
- solution du composé **6** dans le THF (désigné par **6** solution THF)
- couche mince ne comprenant que le composé **6,** avant irradiation UV (désigné par **6** solid on glass)
- couche mince ne comprenant que le composé **6,** après irradiation UV (désigné par **6** solid on glass /irradiated)
- couche mince comprenant le composé **6** et 50% PAG, avant irradiation UV (désigné par **6**/PAG50%)
- couche mince comprenant le composé **6** et 50% PAG, après irradiation UV (désigné par **6**/PAG50%/irradiated)
- couche mince comprenant le composé **6** et 50% TBAF.

L'encombrement stérique introduit par la fonction triéthoxysilane et le groupement cyclohexyle dirigent l'organisation supramoléculaire du précurseur **6** à l'état solide vers une agrégation de type J. Le déplacement vers le rouge du maximum d'absorption de 430 nm dans le THF à 450 nm à l'état solide (Figure 4a) est cohérent avec le couplage excitonique de groupements aromatiques dans ce type d'organisation. Ce précurseur reste fortement fluorescent à l'état solide^{[10]}. Bien que l'hydrolyse-polycondensation produise l'élimination des éthoxyles et la formation de liaisons Si-O-Si, l'encombrement de la fonction cyclohexyle évite le recouvrement des chromophores qui restent dans une agrégation J.

Il est important de noter que la présence du PAG dans le film de **6** constitue une protection contre la photo-oxydation du chromophore. Alors que l'irradiation (100 mJ/cm²) de **6** (30 mg/mL) déposé sur une lame de verre provoque une chute dramatique des intensités des bandes d'absorption et d'émission (Figures 4a et 4b, courbes « 6 solid on glass » et « 6 solid on glass/irradiated ») (50% de l'intensité de fluorescence est perdue par photobleaching), en présence de 0,5 éq de PAG, la bande d'absorption du chromophore n'est pratiquement pas affectée (Figures 4a et 4b, courbes « 6/PAG50% », « 6/PAG50%/irradiated », « 6/PAG50%/irradiated washed »). En raison de la présence de PAG jouant le rôle de filtre optique, l'intensité de fluorescence d'un film **6/PAG50%** est beaucoup plus faible que celle d'un film de **6.** Seulement 10% de fluorescence sont perdus lors de l'irradiation et de façon encore plus intéressante, le lavage du film **6/PAG50%/UV,** non seulement élimine le PAG et ses résidus mais permet également de retrouver les mêmes propriétés d'émission que les matériaux obtenus par hydrolyse-polycondensation classique (Figure 4b, courbe « 6/TBAF50% »).

### EXEMPLE 6:

Des films minces ont été préparés comme dans l'exemple 3, mais avec une épaisseur de 170nm.

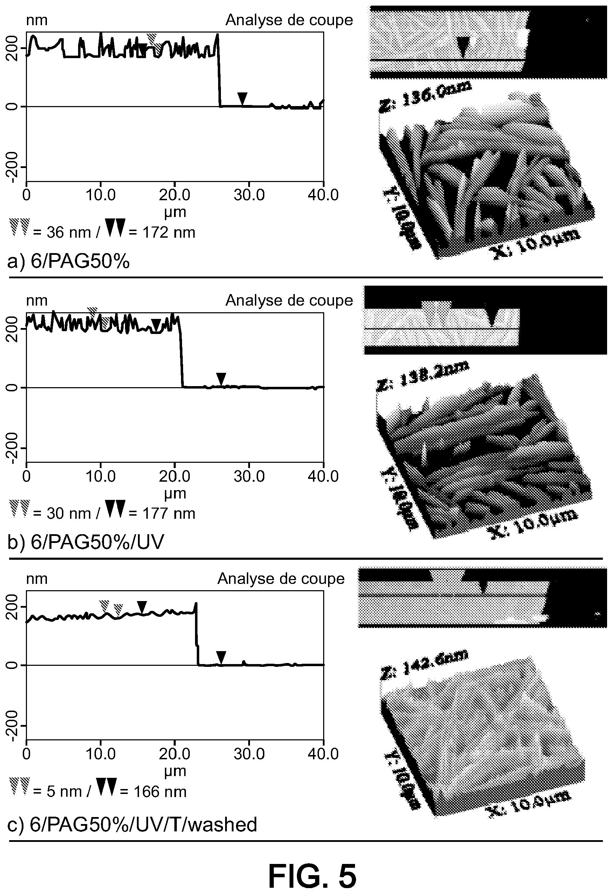

L'observation de la topographie par AFM d'un film **6/PAG50%/UV/T/Washed** de 170 nm d'épaisseur (Figure 5c) a mis en évidence une surface nanostructurée avec une rugosité de 5 nm. Ceci était surprenant compte tenu du fait que les films obtenus par voie sol-gel classique (vapeurs d'HCl ou TBAF) sont parfaitement homogènes et lisses. Une étude de l'évolution de la morphologie du film à chaque étape du procédé d'hydrolyse-polycondensation photochimique a permis de déterminer l'origine de cette nanostructuration (Figures 5a, 5b and 5c). En effet, comme on peut l'observer sur la figure 5a, un film de **6** (30 mg/mL) et 0,5 éq. de PAG fraîchement appliqué par dépôt à la tournette(spin-coating) sur plaque (wafer) de silicium est composé d'une couche homogène (épaisseur ≈ 172 nm) sur laquelle reposent des microcristaux (épaisseur ≈ 36 nm) (Figure 5a). L'irradiation UV du film ne produit pas de modification visible de la topographie (Figure 5b). Ainsi, le film 6/PAG50%/UV est toujours composé d'une couche homogène (épaisseur ≈ 177 nm) sur laquelle reposent des microcristaux (épaisseur ≈ 30 nm). Quelques défauts apparaissent sur les cristaux. Par contre, le lavage du film par différents solvants (film 6/PAG50%/UV/T/Washed, Figure 5c) produit une disparition complète des cristaux en laissant la couche homogène d'une épaisseur de 166 nm. La rugosité de 5 nm qui avait été attribuée à une nanostructuration correspond en fait à l'empreinte laissée par les cristaux. D'après les données obtenues par l'étude FTIR qui confirme une élimination complète du PAG après lavage et d'après l'image AFM de **6** seul (Figure 1) montrant un film homogène, nous pouvons raisonnablement affirmer que la couche homogène correspond à **6** et que les microcristaux correspondent au PAG.

### EXEMPLE 7 :

On prépare un film composite d'une épaisseur d'environ 110 nm de **6** 30mg/mL et 0,5 éq. de PAG dans du THF que l'on applique sur une plaque (wafer) de silicium. Le film est appliqué par dépôt à la tournette (spin-coating). Puis une grille de cuivre 300 x 75 mesh (trous de 63 x 204 µm) (support utilisé pour la microscopie électronique à transmission TEM) a été placée sur le film en tant que masque. La grille a été maintenue en position en disposant sur l'ensemble une lame de verre.

L'irradiation a été réalisée au moyen d'une lampe UV large bande (200-600 nm, 150 mW/cm²). Elle a été conduite en filtrant les UV lointains (< 300 nm) et en apportant 100 mJ/cm².

Après l'irradiation, la grille de TEM a été enlevée. Le film a été recuit à 60°C pendant 10 minutes et développé par lavage avec du THF, de l'acétone et de l'éthanol. Seul le précurseur non exposé a été solubilisé.

Le dessin obtenu est observé par microscopie de lumière blanche (figure 6a) et par microscopie de fluorescence (figure 6b). Le dessin est produit uniformément sur une surface de 3 mm de diamètre. Les pixels photolithographiés restent fortement fluorescents.

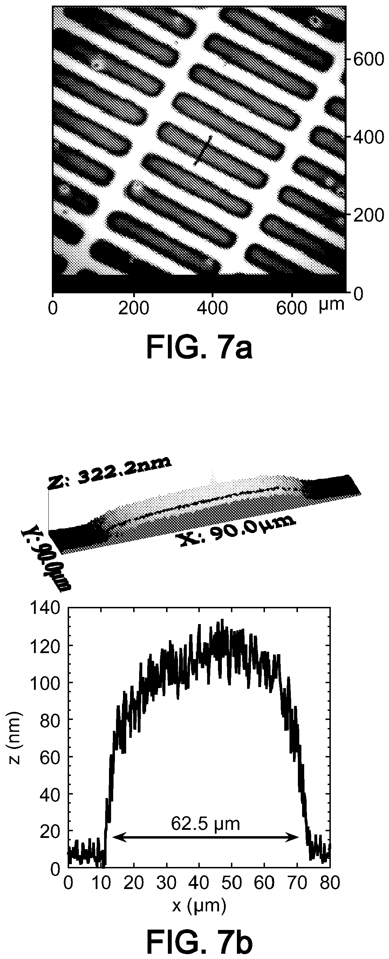

L'image topographique d'un pixel par AFM est donnée en figure 7a et le profil topographique correspondant est donné en figure 7b.

Les dimensions des pixels obtenus par hotolithographie correspondent aux dimensions des trous rectangulaires de la grille. L'empreinte laissée par les cristaux de PAG peut être observée sur le profil d'un pixel (Figure 7b).
[1] a) C. Sanchez, B. Lebeau, F. Chaput, J.-P. Boilot, Adv. Mater. 2003, 15, 1969 and references therein; b) B. Dunn, J. D. Mackenzie, J. I. Zink, O. M. Stafsudd, Proc. SPIE int. Soc. Opt. Eng., 1990, 1328, 174; c) J. B. Mac Chesnay, Proc. SPIE int. Soc. Opt. Eng., 1989, 988, 131; d) R. Reisfeld, C. K. Jorgensen, Struct. Bonding, 1982, 49, 1.
[2] a) K. J. Shea, D. A. Loy, O. W. Webster, J. Am. Chem. Soc., 1992, 114, 6700; b) R. J. P. Corriu, J. J. E. Moreau, P. Thepot, M. Wong Chi Man, Chem. Mater., 1992, 4, 1217; c) R. J. P. Corriu, P. Hesemann, G. F. Lanneau, Chem. Commun., 1996, 1845; d) P. N. Prasad, Mater. Res. Soc. Symp. Proc., 1990, 180, 741.
[3] T. Dantas de Morais, F. Chaput, K. Lahlil, J-P. Boilot, Adv. Mater. 1999, 11, 107.
[4] M. Schneider, J. Hagen, D. Haarer, K. Müllen, Adv. Mater., 2000, 12, 351.
[5] a) O. Haruyuki, S. Koichi, T. Masahiro, S. Masamitsu, F. Tsuyoshi; K. Shinichi, Y. Mitsuaki, J. Photopolym. Sci. Tec., 2003, 16, 87 and references therein; b) A. Rikako, N. Yoshihiko, Y. Hiroshi, M. Satoshi, H. Shuzi, J. Polym. Sci., Pol. Chem., 1997, 35, 2355.
[6] J. Yu, M. Abley, C. Yang and S. Holdcroft, Chem. Commun., 1998, 1503.
[7] A. Kowalewska, J. Mat. Chem., 2005, 15, 4997.
[8] a) D. A. Doshi, N. K. Huesing, M. Lu, H. Fan, Y. Lu, K., Jr. Simmons-Potter, A. J. Hurd, C. J. Brinker, Science, 2000, 290, 107; (b) Y. Lu, Y. Yang, A. Sellinger, M. Lu, J. Huang, H. Fan, R. Haddad, G. Lopez, A. R. Burns, J. Shelnutt, C. J. Brinker, Nature, 2001, 410, 913.
[9] G. Wantz, O. J. Dautel, R. Almairac, L. Hirsh, F. Serein-Spirau, L. Vignau, J.-P. Lere-Porte, J.P. Parneix, J. J. E. Moreau, Org. Elec., 2006, 7, 38.
[10] O. J. Dautel, G. Wantz, R. Almairac, D. Flot, L. Hirsh, J.-P. Lere-Porte, J.P. Parneix, F. Serein-Spirau, L. Vignau, J. J. E. Moreau, J. Am. Chem. Soc., 2006, 128, 4892.
[11] J. P. Malval, F. Morlet-Savary, X. Allonas, J.-P. Fouassier, S. Suzuki, S. Takahara, T. Yamaoka, Chem. Phys. Letters, 2007, 443, 323.

## Revendications

1. Procédé d'hydrolyse-polycondensation de chromophore réticulable et stériquement encombré, **caractérisé par le fait que** l'hydrolyse-polycondensation est catalysée par un acide libéré par un photo-générateur d'acide (PAG) choisi dans le groupe comprenant les dérivés de fluoroalkylsulfonyloxy et les sels d'iodoniums,
dans lequel le chromophore réticulable et stériquement encombré est choisi parmi ceux de formules ci-dessous : 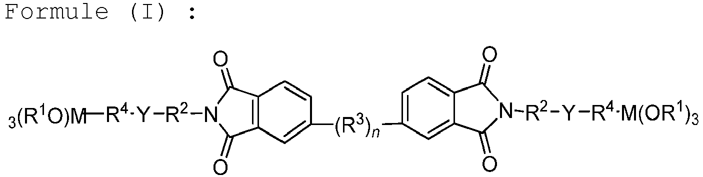 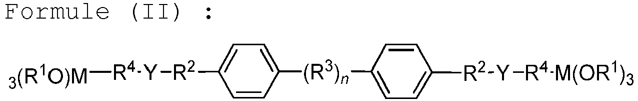 dans lesquelles
R¹ représente alkyle en C₁-C₄;
R² représente un groupement à encombrement stérique, de préférence choisi dans le groupe comprenant : 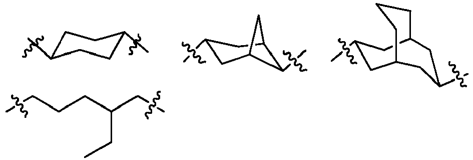 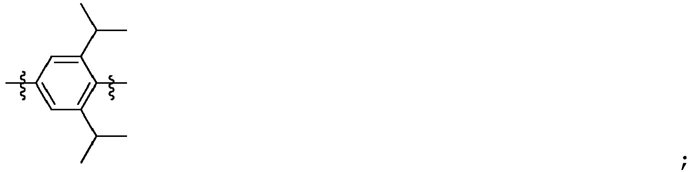
R³ représente un système pi-conjugué, de préférence choisi dans le groupe comprenant 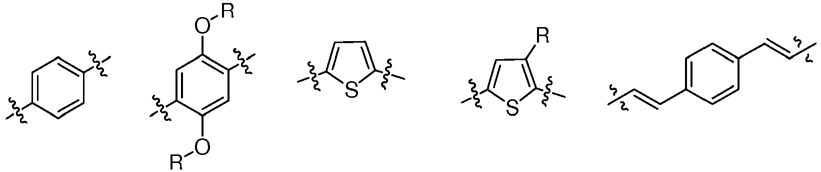 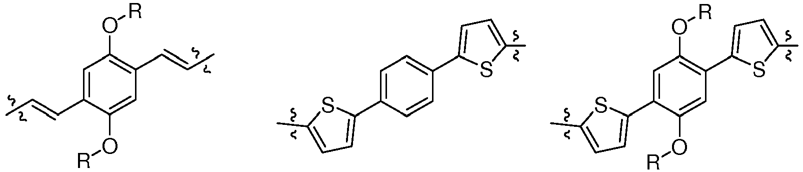
avec R représentant H ou un groupement alkyle en C₁-C₁₈, de préférence en C₁-C₁₂, et plus préférentiellement encore en C₁-C₆, ledit groupe alkyle étant éventuellement ramifié ou substitué par un hétéroatome (O, S, N...) ;
Y représente O, S ou NH ou est absent;
R⁴ représente un groupe alkyle en C₃-C₁₈, de préférence en C₃-C₈ et plus préférentiellement en C₃;
M représente un métal du groupe III ou IV de la classification périodique, de préférence Si, Ti, Zr, Sn, Al, et plus préférentiellement encore Si;
n est un nombre entier.

2. Procédé selon la revendication 2, **caractérisé par le fait que** les groupes à encombrement stérique sont choisis dans le groupe comprenant :

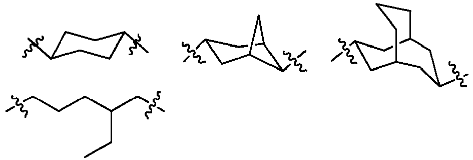

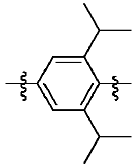

3. Procédé selon la revendication 2, **caractérisé par le fait que** le chromophore réticulable et stériquement encombré comprend deux groupes à encombrement stérique identiques.

4. Procédé selon la revendication 1, **caractérisé par le fait que** les dérivés de fluoroalkylsulfonyloxy sont choisis dans le groupe comprenant le N-trifluorométhylsulfonyloxy-1,8-naphtalimide (NIOTf) de formule : 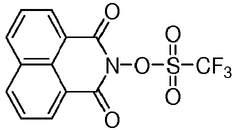 les dérivés de NIOTf de formules : 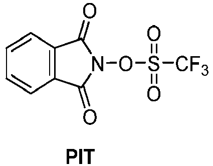 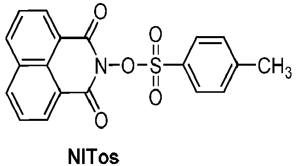 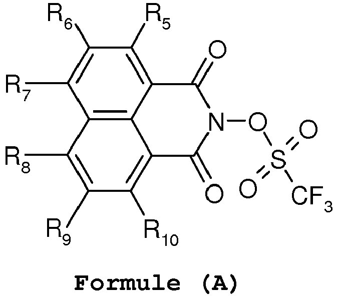 Avec R₅ à R₁₀ pouvant, chacun indépendamment l'un de l'autre, être choisi parmi :
H ; CH₃ ; alkyl en C₅ à C₂₀ ; (alkyl linéaire en C₁ à C₄)-C=C-, de préférence CH₃-C≡C- ; (alkyl en C₁ à C₄)₂-CH-C≡C- ; (alkyl en C₁ à C₄)₃-C-C≡C-, de préférence (CH₃)₃-C-C≡C- ; (alkyl en C₁ à C₄)₃-Si-C≡C-, de préférence 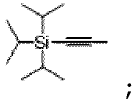 et d'autres composés de formule :

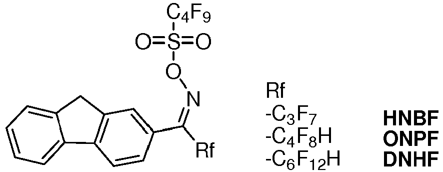

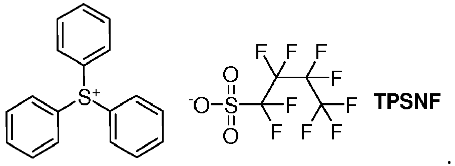

5. Procédé selon la revendication 4, **caractérisé par le fait que** le PAG est un dérivé de NIOTf de formule (A), de préférence le TIPSA-NIOTf, de formule :

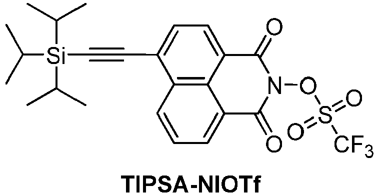

6. Procédé selon la revendication 1, **caractérisé par le fait que** les sels d'iodonium sont choisis dans le groupe comprenant Ph₂IB (C₆H₅) ₄, Ph₂IOSO₂CF₃, Ph₂ISbF₆, Ph₂IBF₄ et leurs mélanges.

7. Procédé selon l'une quelconque des revendications 1 à 6, **caractérisé par le fait que** le chromophore réticulable et stériquement encombré, est appliqué sur un support qui est choisi dans le groupe comprenant le verre, le silicium et l'oxyde d'indium dopé à l'étain ou ITO.

8. Procédé selon l'une quelconque des revendications 1 à 7, **caractérisé par le fait que** la quantité de PAG est comprise entre 0,01 et 100%, de préférence entre 10 et 60% et plus préférentiellement encore d'environ 50%, les pourcentages étant des pourcentages molaires par rapport au nombre de mole de chromophore réticulable.

9. Procédé selon l'une quelconque des revendications 1 à 5, 7, 8, **caractérisé par le fait que** la quantité de PAG de formule (A), de préférence le TIPSA-NIOTf, est comprise entre 0,01 et 50%, de préférence comprise entre 0,01 et 20% et plus préférentiellement encore comprise entre 0,01 et 5%, les pourcentages étant des pourcentages molaires par rapport au nombre de mole de chromophore réticulable.

10. Procédé selon l'une quelconque des revendications 1 à 6, **caractérisé par le fait que** le procédé comporte les étapes suivantes :
- choix d'un support ;
- application du chromophore réticulable et stériquement encombré sur une face du support ;
- application du PAG sur ladite face du support ;
- irradiation UV ;
- éventuellement recuit ;
- éventuellement élimination du PAG n'ayant pas réagi et de ses produits de décomposition.

11. Procédé selon la revendication 10, **caractérisé par le fait que** l'application du chromophore réticulable et stériquement encombré se fait par dépôt à la tournette (spin-coating).

12. Procédé de photolithographie comprenant les étapes de:
- choix d'un support ;
- application du chromophore réticulable et encombré stériquement et du PAG sur une face du support ;
- application d'un masque sur la face du support comprenant le chromophore et le PAG ;
- irradiation UV permettant l'hydrolyse-polycondensation du chromophore réticulable et encombré stériquement selon la revendication 1 ;
- éventuellement recuit ;
- élimination du PAG et de ses produits de décomposition et du chromophore réticulable n'ayant pas réagi.

13. Composition comprenant un chromophore réticulable et stériquement encombré choisi parmi ceux de formules ci-dessous : 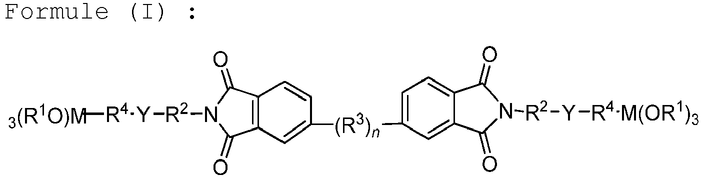 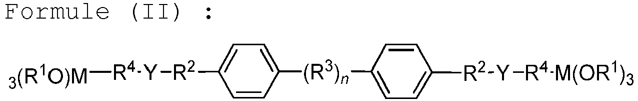 dans lesquelles
R¹ représente alkyle en C₁-C₄;
R² représente un groupement à encombrement stérique, de préférence choisi dans le groupe comprenant : 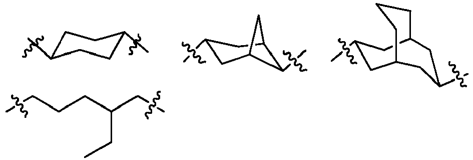 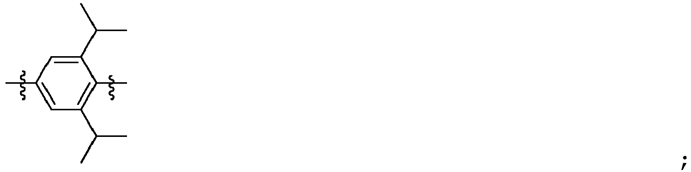
R³ représente un système pi-conjugué, de préférence choisi dans le groupe comprenant 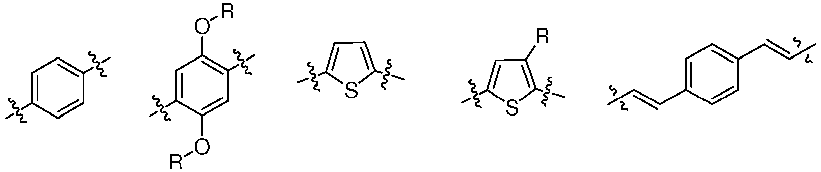 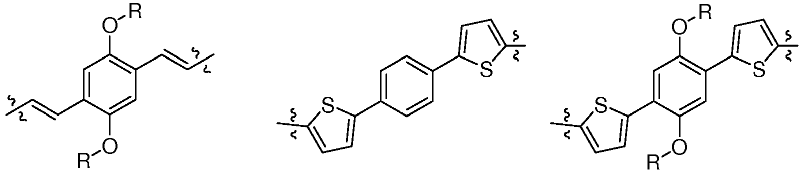
avec R représentant H ou un groupement alkyle en C₁-C₁₈, de préférence en C₁-C₁₂, et plus préférentiellement encore en C₁-C₆, ledit groupe alkyle étant éventuellement ramifié ou substitué par un hétéroatome (O, S, N...) ;
Y représente O, S ou NH ou est absent;
R⁴ représente un groupe alkyle en C₃-C₁₈, de préférence en C₃-C₈ et plus préférentiellement en C₃;
M représente un métal du groupe III ou IV de la classification périodique, de préférence Si, Ti, Zr, Sn, Al, et plus préférentiellement encore Si;
n est un nombre entier.
et un photo-générateur d'acide (PAG) choisi dans le groupe comprenant les dérivés de fluoroalkylsulfonyloxy et les sels de iodoniums.

14. Composition selon la revendication 13, **caractérisée par le fait qu'**elle contient un solvant choisi dans le groupe comprenant le THF, le dioxane, l'acétone, la méthyléthylcétone, le dichlorométhane, l'hexane, le cyclohexane, l'éthanol, et leurs mélanges.

15. Méthode de marquage comprenant l'application par impression jet d'encre sur un support en verre d'une composition telle que définie à l'une quelconque des revendications 13 ou 14, puis l'irradiation UV.

## Patentansprüche

1. Verfahren zur Hydrolyse-Polykondensation von vernetzbarem und sterisch gehindertem Chromophor, **dadurch gekennzeichnet, dass** die Hydrolyse-Polykondensation durch eine von einem Photosäure-Generator (PAG) freigesetzte Säure katalysiert wird, welcher ausgewählt ist aus der Gruppe, die Fluoroalkylsulfonyloxy-Derivate und Iodonium-Salze aufweist, wobei der vernetzbare und sterisch gehinderte Chromophor ausgewählt ist aus den nachstehenden Formeln: 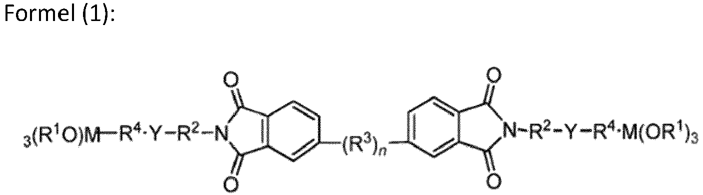 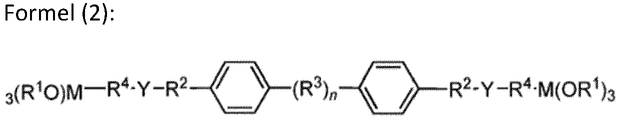 wobei
R¹ C₁-C₄ Alkyl darstellt,
R² eine Gruppe mit sterischer Hinderung darstellt, vorzugsweise ausgewählt aus der Gruppe, welche aufweist: 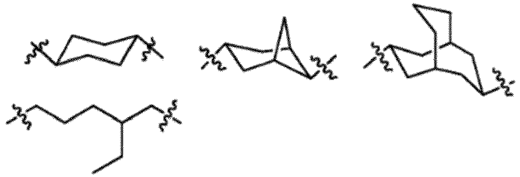 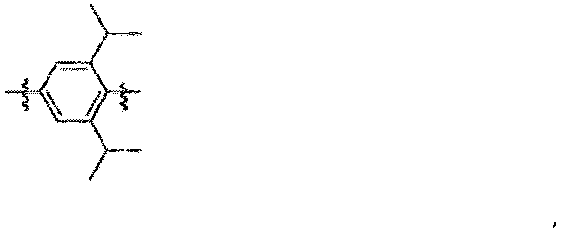
R³ ein pi-konjugiertes System darstellt, welches vorzugsweise ausgewählt ist aus der Gruppe, die aufweist: 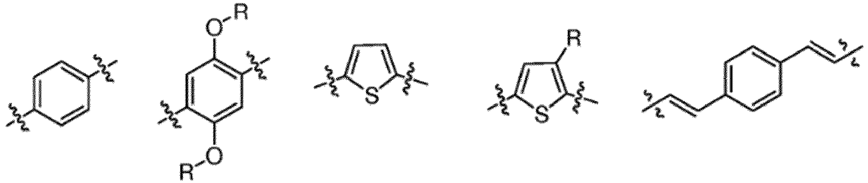 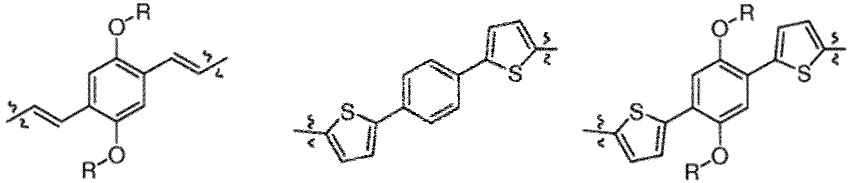
wobei R H oder eine C₁-C₁₈ Alkylgruppe darstellt, vorzugsweise C₁-C₁₂ und noch bevorzugter C₁-C₆, wobei besagte Alkylgruppe gegebenenfalls verzweigt oder durch ein Heteroatom (O, S, N...) substituiert ist,
Y O, S oder NH darstellt oder nicht vorhanden ist,
R⁴ eine C₃-C₁₈ Alkylgruppe darstellt, vorzugsweise C₃-C₈ und bevorzugter C₃,
M ein Metall der Gruppe III oder IV des Periodensystems darstellt, vorzugsweise Si, Ti, Zr, Sn, Al und noch bevorzugter Si,
n eine ganze Zahl ist.

2. Verfahren gemäß Anspruch 2, **dadurch gekennzeichnet, dass** die Gruppen mit sterischer Hinderung ausgewählt sind aus der Gruppe, aufweisend:

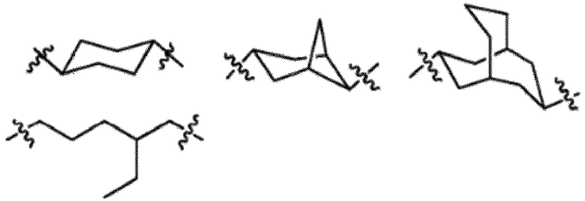

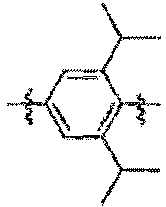

3. Verfahren gemäß Anspruch 2, **dadurch gekennzeichnet, dass** der vernetzbare und sterisch gehinderte Chromophor zwei gleiche Gruppen mit sterischer Hinderung aufweist.

4. Verfahren gemäß Anspruch 1, **dadurch gekennzeichnet, dass** die Fluoroalkylsulfonyloxy-Derivate ausgewählt sind aus der Gruppe, welche aufweist N-Trifluoromethylsulfonyloxy-1,8-naphtalimid (NIOTf) der Formel: 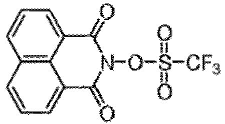 NIOTf-Derivate der Formeln: 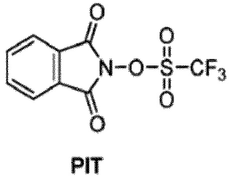 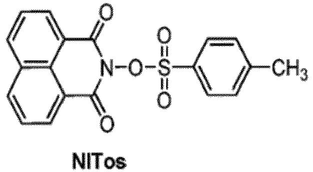 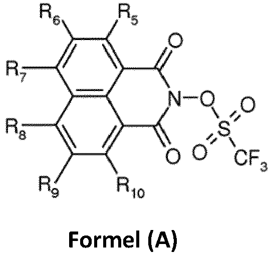 wobei Rs bis R₁₀ voneinander unabhängig ausgewählt sein können aus:
H, CH₃, C₅-C₂₀ Alkyl, (lineares C₁-C₄ Alkyl)-C≡C-, vorzugsweise CH₃-C≡C-, (C₁-C₄ Alkyl)₂-CH-C≡C-, (C₁-C₄ Alkyl)₃-C-C≡C-, vorzugsweise (CH₃)₃-C-C≡C-, (C₁-C₄ Alkyl)₃-Si-C≡C-, vorzugsweise 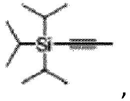 und andere Zusammensetzungen der Formel:

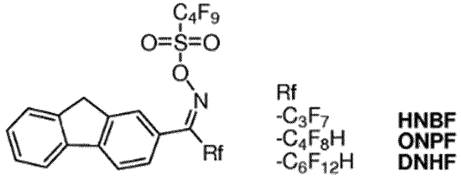

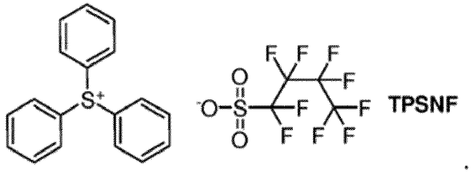

5. Verfahren gemäß Anspruch 4, **dadurch gekennzeichnet, dass** der PAG ein NIOTf-Derivat der Formel (A) ist, vorzugsweise TIPSA-NIOTf der Formel:

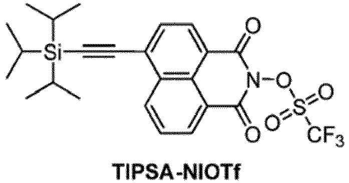

6. Verfahren gemäß Anspruch 1, **dadurch gekennzeichnet, dass** die lodonium-Salze ausgewählt sind aus der Gruppe, welche aufweist Ph₂IB(C₆H₅)₄,Ph₂IOSO₂CF₃, Ph₂ISbF₆, Ph₂IBF₄ und Mischungen davon.

7. Verfahren gemäß irgendeinem der Ansprüche 1 bis 6, **dadurch gekennzeichnet, dass** der vernetzbare und sterisch gehinderte Chromophor auf einen Träger aufgebracht wird, der ausgewählt ist aus der Gruppe, welche Glas, Silizium und mit Zinn oder ITO dotiertes Indiumoxid aufweist.

8. Verfahren gemäß irgendeinem der Ansprüche 1 bis 7, **dadurch gekennzeichnet, dass** die Menge an PAG zwischen 0,01 und 100% liegt, vorzugsweise zwischen 10 und 60% und noch bevorzugter bei etwa 50%, wobei die Prozentsätze molare Prozentsätze relativ zur Molzahl des vernetzbaren Chromophors sind.

9. Verfahren gemäß irgendeinem der Ansprüche 1 bis 5, 7, 8, **dadurch gekennzeichnet, dass** die Menge an PAG der Formel (A), vorzugsweise TIPSA-NIOTf, zwischen 0,01 und 50% liegt, vorzugsweise zwischen 0,01 und 20% und mehr und noch bevorzugter zwischen 0,01 und 5%, wobei die Prozentsätze molare Prozentsätze relativ zur Molzahl des vernetzbaren Chromophors sind.

10. Verfahren gemäß irgendeinem der Ansprüche 1 bis 6, **dadurch gekennzeichnet, dass** das Verfahren die folgenden Schritte aufweist:
- Wählen eines Trägers,
- Aufbringen des vernetzbaren und sterisch gehinderten Chromophors auf eine Fläche des Trägers,
- Aufbringen des PAG auf der besagten Fläche des Trägers,
- Bestrahlen mit UV,
- gegebenenfalls Tempern,
- gegebenenfalls Entfernen des nicht umgesetzten PAGs und seinen Zersetzungsprodukten.

11. Verfahren gemäß Anspruch 10, **dadurch gekennzeichnet, dass** das Aufbringen des vernetzbaren und sterisch gehinderten Chromophors durch Rotationsbeschichtung (spin-coating) durchgeführt wird.

12. Photolithographie-Verfahren, welches die Schritte aufweist:
- Auswählen eines Trägers,
- Aufbringen des vernetzbaren und sterisch gehinderten Chromophors und des PAGs auf eine Fläche des Trägers,
- Aufbringen einer Maske auf die Fläche des Trägers, welche den Chromophor und den PAG aufweist,
- Bestrahlen mit UV, was die Hydrolyse-Polykondensation des vernetzbaren und sterisch gehinderten Chromophors gemäß Anspruch 1 ermöglicht,
- gegebenenfalls Tempern,
- Entfernen des PAGs und seinen Zersetzungsprodukten sowie des nicht umgesetzten vernetzbaren Chromophors.

13. Zusammensetzung, welche aufweist einen vernetzbaren und sterisch gehinderten Chromophor, welcher ausgewählt ist aus den nachstehenden Formeln: 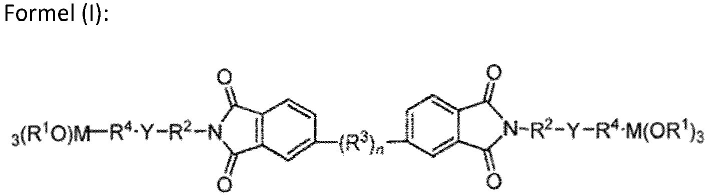 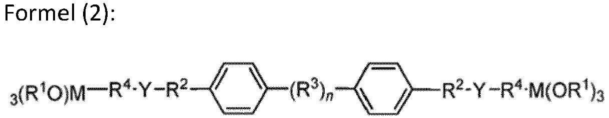 wobei
R¹ C₁-C₄ Alkyl darstellt,
R² eine Gruppe mit sterischer Hinderung darstellt, vorzugsweise ausgewählt aus der Gruppe, welche aufweist: 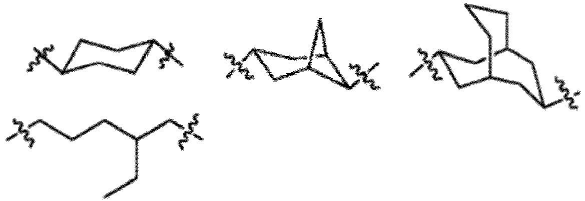 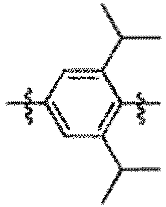
R³ ein pi-konjugiertes System darstellt, vorzugsweise ausgewählt aus der Gruppe, welche aufweist 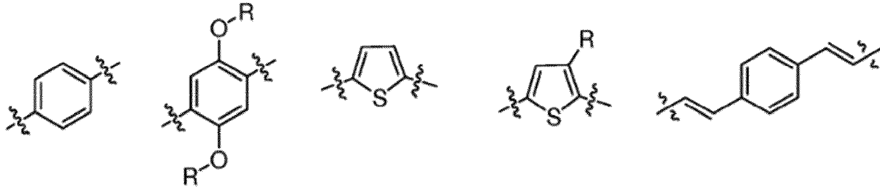 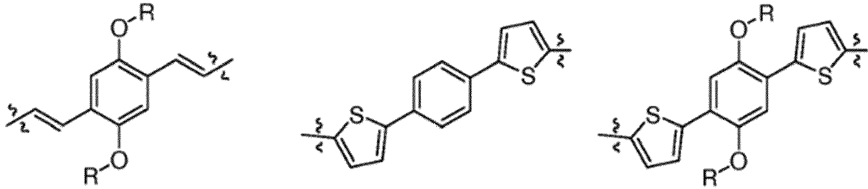
wobei R H oder eine C₁-C₁₈ Alkylgruppe darstellt, vorzugsweise C₁-C₁₂ und noch bevorzugter C₁-C₆, wobei besagte Alkylgruppe gegebenenfalls verzweigt oder durch ein Heteroatom (O, S, N...) substituiert ist,
Y O, S oder NH darstellt oder nicht vorhanden ist,
R⁴ eine C₃-C₁₈ Alkylgruppe darstellt, vorvorzugsweise C₃-C₈ und bevorzugter C₃,
M ein Metall der Gruppe III oder IV des Periodensystems darstellt, vorzugsweise Si, Ti, Zr, Sn, Al und noch bevorzugter Si,
n eine ganze Zahl ist
und einen Photosäure-Generator (PAG), welcher ausgewählt ist aus der Gruppe, welche Fluoroalkylsulfonyloxy-Derivate und lodonium-Salze aufweist.

14. Zusammensetzung gemäß Anspruch 13, **dadurch gekennzeichnet, dass** sie ein Lösemittel enthält, welches ausgewählt ist aus der Gruppe, die aufweist THF, Dioxan, Aceton, Methylethylketon, Dichlormethan, Hexan, Cyclohexan, Ethanol und Mischungen davon.

15. Markierungsverfahren, welches das Aufbringen durch Tintenstrahldruck auf einen Glasträger einer Zusammensetzung gemäß irgendeinem der Ansprüche 13 oder 14 und anschließendes Bestrahlen mit UV aufweist.

## Claims

1. A process for the hydrolysis-polycondensation of a sterically hindered crosslinkable chromophore, **characterized in that** the hydrolysis-polycondensation is catalyzed with an acid released by a photoacid generator (PAG) chosen from the group comprising fluoroalkylsulfonyloxy derivatives and iodonium salts,
wherein the sterically hindered crosslinkable chromophore is chosen from those having the formulae below: 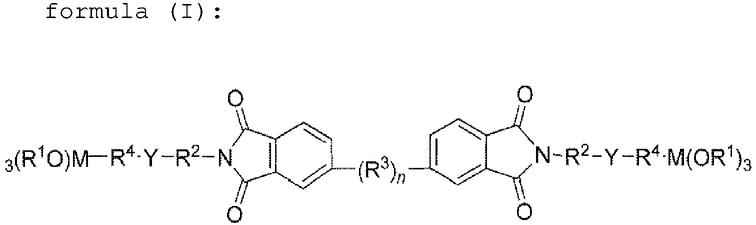 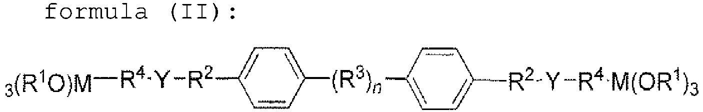 in which
R¹ represents C₁-C₄ alkyl;
R² represents a sterically hindered group, preferably chosen from the group comprising: 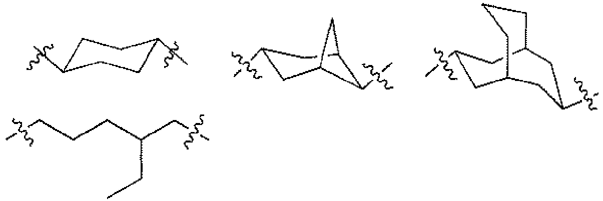 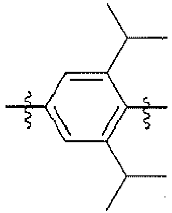
R³ represents a pi-conjugated system, preferably chosen from the group comprising 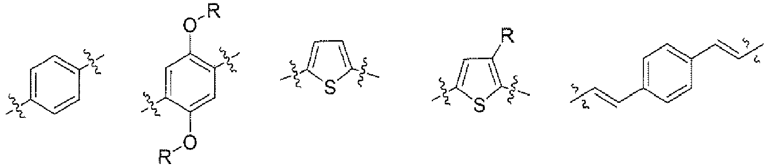 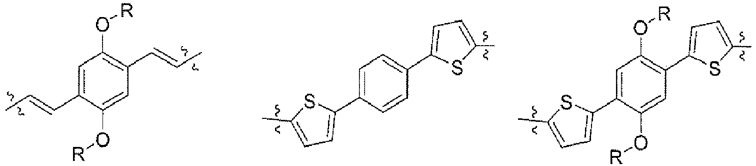
with R representing H or a C₁-C₁₈, preferably C₁-C₁₂ and even more preferentially C₁-C₆ alkyl group, said alkyl group being optionally branched or substituted with a heteroatom (O, S, N, etc.);
Y represents O, S or NH or is absent;
R⁴ represents a C₃-C₁₈, preferably C₃-C₈ and more preferentially C₃ alkyl group;
M represents a metal from group III or IV of the Periodic Table, preferably Si, Ti, Zr, Sn, Al and even more preferentially Si;
n is an integer.

2. The process according to claim 1, **characterized in that** the sterically hindered groups are chosen from the group comprising:

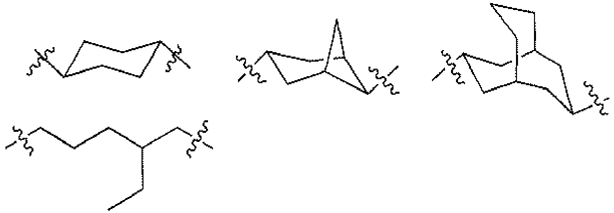

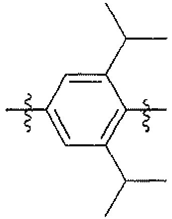

3. The process according to claim 2, **characterized in that** the sterically hindered crosslinkable chromophore comprises two identical sterically hindered groups.

4. The process according to claim 1, **characterized in that** the fluoroalkylsulfonyloxy derivatives are chosen from the group comprising N-trifluoromethylsulfonyloxy-1,8-naphthamide (NIOTf) of formula: 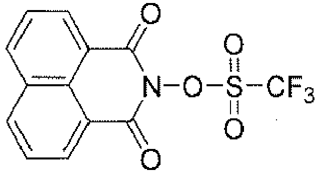 the NIOTf derivatives of formulae: 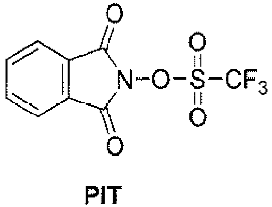 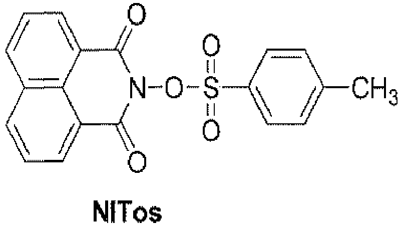 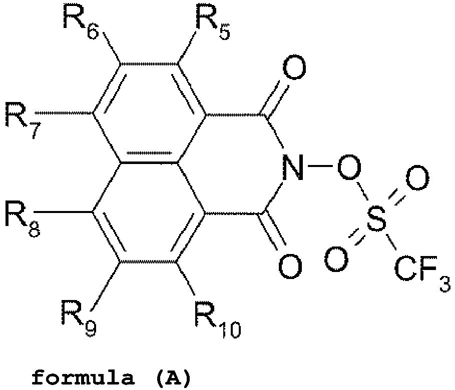 with R₅ to R₁₀, independently of each other, possibly being chosen from:
H; CH₃; C₅ to C₂₀ alkyl; (linear C₁ to C₄ alkyl)-C≡C-, preferably CH₃-C≡C-; (C₁ to C₄ alkyl)₂-CH-C≡C-; (C₁ to C₄ alkyl)₃-C-C≡C-, preferably (CH₃)₃-C-C≡C-; (C₁ to C₄ alkyl)₃-Si-C≡C-, preferably 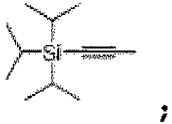 and other compounds of formulae:

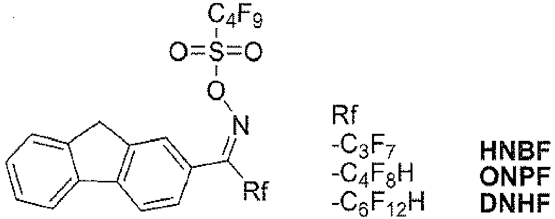

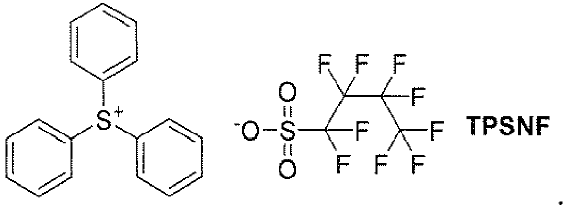

5. The process according to claim 4, **characterized in that** the PAG is an NIOTf derivative of formula (A), preferably the TIPSA-NIOTf, of formula:

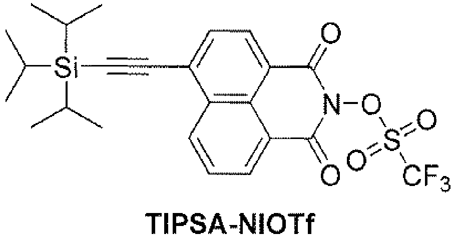

6. The process according to claim 1, **characterized in that** the iodonium salts are chosen from the group comprising Ph₂IB(C₆H₅)₄, Ph₂IOSO₂CF₃, Ph₂ISbF₆, Ph₂IBF₄, and mixtures thereof.

7. The process according to any one of claims 1 to 6, **characterized in that** the sterically hindered crosslinkable chromophore is applied to a support chosen from the group comprising glass, silicon and tin-doped indium oxide or ITO.

8. The process according to any one of claims 1 to 7, **characterized in that** the amount of PAG is between 0.01% and 100%, preferably between 10% and 60% and even more preferentially about 50%, the percentages being molar percentages relative to the number of moles of crosslinkable chromophore.

9. The process according to any one of claims 1 to 5, 7 and 8, **characterized in that** the amount of PAG of formula (A), preferably TIPSA-NIOTf, is between 0.01% and 50%, preferably between 0.01% and 20% and even more preferentially between 0.01% and 5%, the percentages being molar percentages relative to the number of moles of crosslinkable chromophore.

10. The process according to any one of claims 1 to 6, **characterized in that** the process comprises the following steps:
- selection of a support;
- application of the sterically hindered crosslinkable chromophore to one face of the support;
- application of the PAG to said face of the support;
- UV irradiation;
- optionally, annealing;
- optionally, removal of the unreacted PAG and of its decomposition products.

11. The process according to claim 10, **characterized in that** the application of the sterically hindered crosslinkable chromophore takes place by spin-coating.

12. A photolithography process comprising the steps of:
- selection of a support;
- application of the sterically hindered crosslinkable chromophore and of the PAG to one face of the support;
- application of a mask to the face of the support comprising the chromophore and the PAG;
- UV irradiation allowing hydrolysis-polycondensation of the sterically hindered crosslinkable chromophore as claimed in claim 1;
- optionally, annealing;
- removal of the PAG and of its decomposition products and of the unreacted crosslinkable chromophore.

13. A composition comprising a sterically hindered crosslinkable chromophore selected from those having the below formulae: 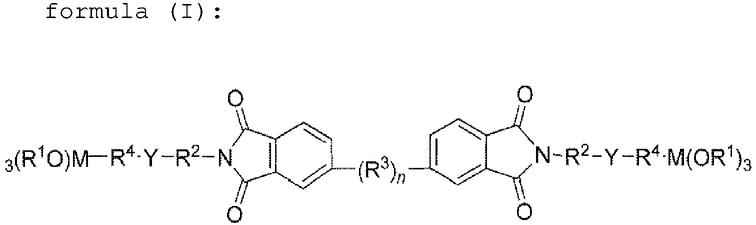 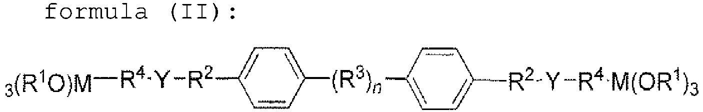 in which
R¹ represents C₁-C₄ alkyl;
R² represents a sterically hindered group, preferably chosen from the group comprising: 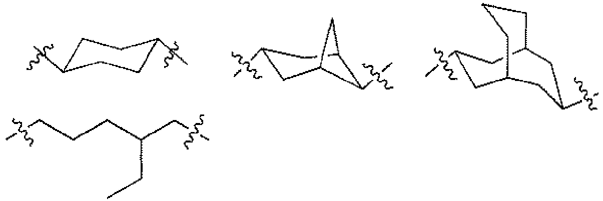 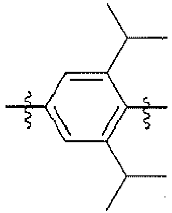
R³ represents a pi-conjugated system, preferably chosen from the group comprising 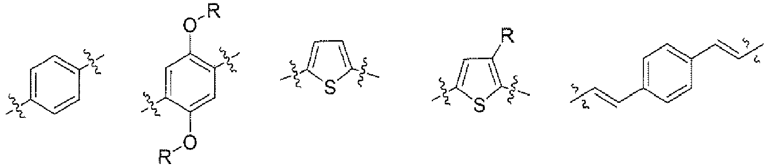 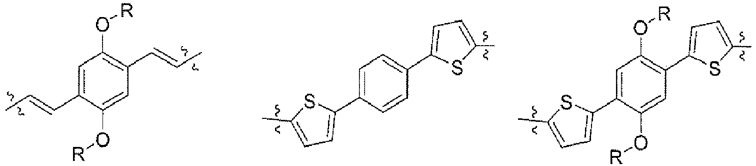
with R representing H or a C₁-C₁₈, preferably C₁-C₁₂ and even more preferentially C₁-C₆ alkyl group, said alkyl group being optionally branched or substituted with a heteroatom (O, S, N, etc.);
Y represents O, S or NH or is absent;
R⁴ represents a C₃-C₁₈, preferably C₃-C₈ and more preferentially C₃ alkyl group;
M represents a metal from group III or IV of the Periodic Table, preferably Si, Ti, Zr, Sn, Al and even more preferentially Si;
n is an integer.
and a photoacid generator (PAG) chosen from the group comprising fluoroalkylsulfonyloxy derivatives and iodonium salts.

14. The composition according to claim 13, **characterized in that** it contains a solvent being chosen from the group comprising THF, dioxane, acetone, methyl ethyl ketone, dichloromethane, hexane, cyclohexane, ethanol, and mixtures thereof.

15. A marking method comprising the application by inkjet printing onto a glass support of a composition as defined in any one of claims 13 to 14, followed by UV irradiation.
